# EUROPEAN PATENT SPECIFICATION

(11) **EP 0 762 707 B1**
(45) Date of publication and mention of the grant of the patent: **07.03.2007**
(21) Application number: 96850139.5
(22) Date of filing: 15.07.1996
(51) Int. Cl.: H04L 29/06

(54) **Arrangement for network access via the telecommunication network by remote-controlled filter**
Anordnung für einen Netzzugang über das Telekommunikationsnetzwerk durch einen ferngesteuerten Filter
Dispositif pour l'accès à des réseaux via le réseau de télécommunication au moyen d'un filtre avec contrôle à distance

(30) Priority: 21.08.1995 SE 9502925
(43) Date of publication of application: 12.03.1997
(73) Proprietor: TELIA AB, 123 86 Farsta (SE)
(72) Inventor: Söderhielm, Mattias, 131 48 Nacka (SE)
(74) Representative: Hopfgarten, Nils

(56) References cited:
- EP-A- 0 645 688
- EP-A- 0 658 837
- WO-A-96/05549
- FR-A- 2 631 764
- US-A- 5 245 656
- METH C: "HARDWARE SOLUTIONS IMPROVE DATA SECURITY" 15 May 1995 , ELECTRONIC DESIGN, VOL. 43, NR. 10, PAGE(S) 53/54, 56 XP000517476 * figure 1 * * page 1, line 31 - line 35 * * page 2, column 1, line 17 - column 2, line 1 * * page 2, column 2, line 21 - line 26 *
- BELLOVIN S M ET AL: "NETWORK FIREWALLS" 1 September 1994 , IEEE COMMUNICATIONS MAGAZINE, VOL. 32, NR. 9, PAGE(S) 50 - 57 XP000476555 * page 1, column 1, line 34 - line 37 * * page 2, column 3, line 28 - line 35 * * page 2, column 4, line 56 - line 58 * * page 3, column 5, line 5 - line 7 * * page 3, column 6, line 1 - line 12 *

## Description

### TECHNICAL FIELD

The present invention relates to a system for network access, especially access to TCP/IP-networks, for instance Internet, according to the preamble of claim 1.

### PRIOR ART

A system of the above-mentioned kind is previously known from Bellovin S.M. et al, "Network Firewalls", September 1994, IEEE Communications Magazine, vol. 32. No.9, 50-57.

In the systems of today a user's access authorization is checked and debiting for modem pools is attended to by a terminal server which is arranged at or in the modem pool. Each modem pool consequently has a server of its own which checks the access. This means that the modem pools are unnecessarily burdened with technology and costs.

### SUMMARY OF THE INVENTION

According to the present invention a separate access check and control server is provided which can be located in just any place in the system. This means a more effective utilization and also makes possible extended functionality in the server, which will be explained in more details below. The access is thus controlled by a filter which can be remote-controlled by this special server which checks the user's authorization and controls the access to the IP-network. The special access check and control server allows that the authorization check and control is moved from the interface between the telecommunication network and the IP-network, which makes possible more efficiency and extended functionality.

Consequently the present invention provides a system to check and control access to IP-networks via the telecommunication networks. The system includes a personal computer connected via the telecommunication network to an interface pool which constitutes the interface between the telecommunication network and the IP-network.

According to the invention, the system includes a remote-controlled filter which can be controlled to allow access to the IP-network, and an access check and control server which can check the authorization of the user of the personal computer, and control the remote-controlled filter depending on the authorization check.

Preferably the normal state of the filter is only to allow access to the access check and control server. The access check and control server also can attend to debiting and different blocking functions in accordance with preferred embodiments of the invention.

The invention is defined in details in enclosed patent claims.

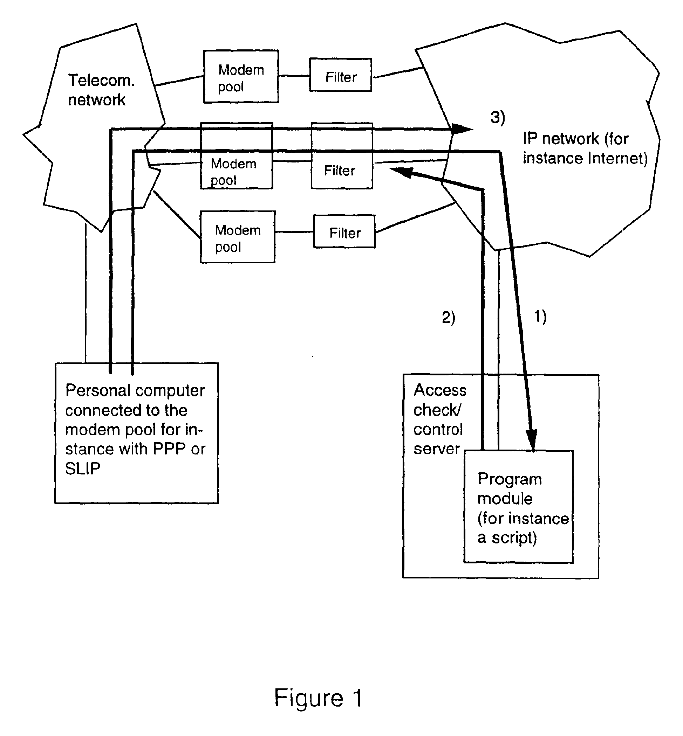

### BRIEF DESCRIPTION OF THE DRAWING

The invention will be described in details below with references to the drawing, where the only drawing is a combined bloch diagram and flow chart over a preferred embodiment of the present invention.
1) The filter only allows access to the access check and control server.
2) Order to open to full Internet-access after check.
3) The filter is open to full Internet-access for the IP-number of the calling computer.

### DETAILED DESCRIPTION OF PREFERRED EMBODIMENTS

The present invention consequently relates to a system for access check and control by means of a server connected in just any place in a TCP/IP-network, for instance Internet. The system makes possible that the debiting can be managed by the server. The invention also makes possible advertisement financing of the access, i.e. that one does not get access to the network before one has studied an advertisement message.

In the figure is shown how a user's personal computer via the telecommunication network and a modem pool and filter is connected to an IP-network. An access check and control server checks the authorization of the user, and controls a remote-controlled filter to control the access. The arrows 1, 2 and 3 describe the steps to open the access to the IP-network.

A user connects himself/herself via the telecommunication network towards a modem pool or interface pool. With interface pool is here meant any form of equipment which allows a user to connect himself/herself from the telecommunication network to the TCP/IP-network. (Transmission Control Protocol/Internet Protocol is an international standard). In the simplest case the interface pool consists of a number of modems connected to a terminal server. The functionality can be gathered in one and the same equipment. Further, it need not be modems; it also can be ATM- or ISDN-adapters or - cards. The protocol which is used for the communication is typically Point-to-Point Protocol (PPP) or Serial Line Internet Protocol (SLIP). The user need either not log in to the modem pool, or is the logging in identity and password the same for all users. The user is by the modem pool allocated (dynamically allocated) an IP-number, i.e. an IP-address.

A filter (a router connected to a computer or a firewall) is connected between the modem pool and the IP-network. This filter allows the calling user initially access only to the server where the access check takes place. This can for instance be a World Wide Web-server. This is the reason for that no special user identification is necessary in the modem pool.

After authorization check of the user and possibly debiting, a program module is activated in the server. This program module now transmits a (suitably encrypted) message to the filter about that it shall open for just this user's IP-address, so that the user gets access to a number of servers (for instance all servers) on the IP-network. The filter stays in open position until the user has disconnected. Then a message is transmitted from the modem pool to the filter about that the user's IP-number shall be blocked, i.e that access only shall be allowed to the access check/control server again. Alternatively this message can be transmitted next time a user who has connected himself/herself has been allocated the same IP-number.

Instead of authorization check and debiting being made in the access check/control server, or as complement to this, the IP-network access can be advertisement financed. This is arranged by the user having to study an advertisement message. When this has been done, the program module which opens for the IP-network access is activated. To ensure that the user has studied the advertisement message, a number of questions can be made in connection to it. Only after the questions have been satisfactorily answered, is opened for the network access.

The above described system can be used to block certain servers in Internet or other IP-networks. This is made by messages being transmitted to all filters about which addresses that shall be blocked. The filters after that block for all these addresses even after they have openend for full access to one user.

The above described system also can be used to give certain users restricted access to the IP-network. By arranging special profiles (lists) over which IP-network addresses that are allowed respective not allowed, the filter can be set selectively for a certain user when he/she opens for IP-network access in the access check/control server. The profiles can be in the access check/control server and be transmitted to the filter via the opening. Alternatively, profiles can be predefined in the filter and the only thing transmitted from the access check/control server is the message about which profile that shall be used.

This functionality can for instance be utilized to prevent that certain users get access to certain pornography-related servers.

Consequently the arrangement according to the present invention implies that the access check/control is moved out from the interface pool to just any place in the system. This means that the number of access check/control servers which are required can be reduced, and each access check/control server can by that be made more effective and offer extended functionality. The hardware and the software which is required to realize the invention is easily realized by an expert in the field. The invention is only restricted by the following patent claims.

## Claims

1. A system for checking and controlling access to an IP-network for at least one remote personal computer via a telecommunication network, said system including an interface pool constituting interface between said telecommunication network and the IP-network, and at least one remote-controlled filter, **characterized in that** said filter is adapted to be controlled to allow access to the IP-network, **in that** an access check and control server is provided to check authorisation of an user of the personal computer to control said remote-controlled filter depending on the authorisation check.

2. The system according to claim 1, **characterized in that** said remote-controlled filter is adapted to only allow access to said server before the user authorisation check.

3. The system according to claim 2, **characterized in that** said remote-controlled filter is adapted, in a rest state after finished access for the user of the personal computer, to allow access only to said server.

4. The system according to any of the previous claims, **characterized in that** said server is adapted to attend to debiting of the user of the personal computer.

5. The system according to any of the previous claims, **characterized in that** said interface pool is a modem pool.

6. The system according to claim 4, c**haracterized in that** said access check and control server, as complement or alternative to the authorisation check and the debiting, is arranged to attend to transmission of a, preferably interactive, advertisement message to the user of the personal computer and, thereafter, to control said remote-controlled filter to allow access to the IP-network.

7. The system according to any of the previous claims, **characterized in that** said server is adapted to block access to certain IP-network addresses.

8. The system according to any of the previous claims, **characterized in that** said server is adapted to block access to certain IP-network addresses, depending on individual authorisation profiles of the user of the personal computer.

9. The system according to claim 8, **characterized in that** said individual authorisation profiles are stored in said server.

10. The system according to claim 8, **characterized in that** predefined authorisation profiles are stored in the remote-controlled filter, and **in that** said server is adapted to tie one of these predefined authorisation profiles to the user of the personal computer depending on the authorisation check.

## Patentansprüche

1. System zum Prüfen und Steuern von Zugang zu einem IP-Netz für wenigstens einen entfernten Personalcomputer über ein Fernmeldenetz, welches System einen Schnittstellenpool, der Schnittstelle zwischen dem Fernmeldenetz und dem IP-Netz bildet, und wenigstens einen ferngesteuerten Filter einschließt, **dadurch gekennzeichnet, dass** der Filter dazu ausgebildet ist, gesteuert zu werden, Zugang zu dem IP-Netz zu erlauben, dass ein Zugangsprüf- und Steuerserver vorgesehen ist, um die Berechtigung eines Benutzers des Personalcomputers zu prüfen, um den ferngesteuerten Filter in Abhängigkeit von der Berechtigungsüberprüfung zu steuern.

2. System nach Anspruch 1, **dadurch gekennzeichnet, dass** der ferngesteuerte Filter dazu ausgebildet ist, nur Zugang zu dem Server vor der Berechtigungsüberprüfung des Benutzers zu erlauben.

3. System nach Anspruch 2, **dadurch gekennzeichnet, dass** der ferngesteuerte Filter dazu ausgebildet ist, in einem Ruhezustand nach beendetem Zugang für den Benutzer des Personalcomputers Zugang nur zu dem Server zu erlauben.

4. System nach einem der vorangehenden Ansprüche, **dadurch gekennzeichnet, dass** der Server dazu ausgebildet ist, die Rechnungsstellung des Benutzers des Personalcomputers durchzuführen.

5. System nach einem der vorangehenden Ansprüche, **dadurch gekennzeichnet, dass** der Schnittstellenpool ein Modempool ist.

6. System nach Anspruch 4, **dadurch gekennzeichnet, dass** der Zugangsprüf- und Steuerserver als Ergänzung oder Alternative zur Berechtigungsüberprüfung und der Rechnungsstellung dazu ausgebildet ist, die Übertragung einer vorzugsweise interaktiven Werbemeldung zum Benutzer des Personalcomputers durchzuführen und danach den ferngesteuerten Filter zu steuern, um Zugang zum IP-Netz zu erlauben.

7. System nach einem der vorangehenden Ansprüche, **dadurch gekennzeichnet, dass** der Server dazu ausgebildet ist, Zugang zu gewissen IP-Netz-Adressen zu blockieren.

8. System nach einem der vorangehenden Ansprüche, **dadurch gekennzeichnet, dass** der Server dazu ausgebildet ist, Zugang zu gewissen IP-Netz-Adressen in Abhängigkeit von individuellen Berechtigungsprofilen des Benutzers des Personalcomputers zu blockieren.

9. System nach Anspruch 8, **dadurch gekennzeichnet, dass** die individuellen Berechtigungsprofile in dem Server gespeichert sind.

10. System nach Anspruch 8, **dadurch gekennzeichnet, dass** die vorbestimmten Berechtigungsprofile in dem ferngesteuerten Filter gespeichert sind und dass der Server dazu ausgebildet ist, eines dieser vorbestimmten Berechtigungsprofile mit dem Benutzer des Personalcomputers in Abhängigkeit von der Berechtigungsüberprüfung zu verknüpfen.

## Revendications

1. Système destiné à vérifier et contrôler l'accès à un réseau IP pour au moins un ordinateur personnel distant via un réseau de télécommunications, ledit système comprenant un ensemble d'interface assurant l'interface entre ledit réseau de télécommunications et le réseau IP, et au moins un filtre commandé à distance, **caractérisé en ce que** ledit filtre est destiné à être commandé pour permettre l'accès au réseau IP, **en ce qu'**un serveur de contrôle d'accès et de commande est prévu pour contrôler l'autorisation d'un utilisateur de l'ordinateur personnel à commander ledit filtre commandé à distance en fonction du contrôle d'autorisation.

2. Système selon la revendication 1, **caractérisé en ce que** ledit filtre commandé à distance est propre à permettre uniquement l'accès audit serveur avant le contrôle d'autorisation de l'utilisateur.

3. Système selon la revendication 2, **caractérisé en ce que** ledit filtre commandé à distance est destiné, dans un état de repos, une fois terminé l'accès de l'utilisateur de l'ordinateur personnel, à permettre uniquement un accès audit serveur.

4. Système selon l'une quelconque des revendications précédentes, **caractérisé en ce que** ledit serveur est destiné à se charger de l'opération de débit de l'utilisateur de l'ordinateur personnel.

5. Système selon l'une quelconque des revendications précédentes, **caractérisé en ce que** ledit ensemble d'interface est un ensemble modem.

6. Système selon la revendication 4, **caractérisé en ce que** ledit serveur de contrôle d'accès et de commande, en tant que complément ou variante du contrôle d'autorisation et de l'opération de débit, est conçu pour se charger de la transmission d'un message publicitaire, préférablement interactif, à l'utilisateur de l'ordinateur personnel et ensuite, pour contrôler ledit filtre commandé à distance pour permettre l'accès au réseau IP.

7. Système selon l'une quelconque des revendications précédentes, **caractérisé en ce que** ledit serveur est destiné à bloquer l'accès à certaines adresses du réseau IP.

8. Système selon l'une quelconque des revendications précédentes, **caractérisé en ce que** ledit serveur est destiné à bloquer l'accès à certaines adresses du réseau IP, en fonction de profils d'autorisation individuels de l'utilisateur de l'ordinateur personnel.

9. Système selon la revendication 8, **caractérisé en ce que** lesdits profils d'autorisation individuels sont stockés dans ledit serveur.

10. Système selon la revendication 8, **caractérisé en ce que** des profils d'autorisation prédéfinis sont stockés dans le filtre commandé à distance, et **en ce que** ledit serveur est adapté pour lier un de ces profils d'autorisation prédéfinis à l'utilisateur de l'ordinateur personnel en fonction du contrôle d'autorisation.
